# EUROPÄISCHE PATENTSCHRIFT

(11) **EP 1 782 979 B1**
(45) Veröffentlichungstag und Bekanntmachung des Hinweises auf die Patenterteilung: **11.05.2011**
(21) Anmeldenummer: 06015201.4
(22) Anmeldetag: 21.07.2006
(51) Int. Cl.: B60J 1/20

(54) **Heckfensterrollo ohne Restlichtspalt**
Gapless roller blind for rear window
Store à enrouleur sans lacune pour une lunette arrière

(30) Priorität: 02.11.2005 DE 102005052618
(43) Veröffentlichungstag der Anmeldung: 09.05.2007
(73) Patentinhaber: BOS GmbH & Co. KG, 73760 Ostfildern (DE)
(72) Erfinder: Thumm, Andreas, 72622 Nürtingen (DE); Kebede, Fekadu, 73760 Ostfildern (DE)
(74) Vertreter: Rüger, Barthelt & Abel Patentanwälte

(56) Entgegenhaltungen:
- EP-A- 0 394 123
- EP-A- 1 157 870
- WO-A-2005/012015
- DE-A1- 10 339 583

## Beschreibung

Fensterrollos bei Kraftfahrzeugen dienen dem Zweck, die Erwärmung im Inneren zu vermindern um so mit kleineren Leistungen bei Klimaanlagen auskommen zu können. Hinsichtlich der Sonneneinstrahlung ist im Sommer bei steilstehender Sonne das Heckfenster besonders kritisch. Die Heckfensterscheibe liegt verhältnismäßig flach. Unabhängig von der Fahrtrichtung fällt praktisch immer Sonnenlicht durch das Heckenster ein und die beschienenen Teile werden nicht unerheblich erwärmt. Heckfensterrollos haben deswegen an Fahrzeugen eine verhältnismäßig große Verbreitung gefunden.

Bei einem bekannten Heckfensterrollo gemäß der DE 102 48 591 A1 befindet sich unterhalb der Hutablage eine drehbar gelagerte Wickelwelle. An dieser Wickelwelle ist mit einer Kante eine Rollobahn befestigt. Die Rollobahn ist durch einen Schlitz in der Hutablage ausziehbar. Durch den Schlitz wird die Hutablage in zwei Teile aufgeteilt, nämlich einen, der der Rücksitzlehne benachbart ist, und einen, der an die Heckscheibe angrenzt. In der Innenverkleidung der C-Säule, bei einem viertürigen Fahrzeug, verlaufen spiegelbildlich zueinander zwei Führungsschienen, die unmittelbar im Bereich des Schlitzes in der Hutablage in den Raum unter der Hutablage verschwinden. Das obere Ende der Führungsschienen liegt knapp unterhalb der oberen Dachkante des Heckfensters. Die beiden spiegelbildlich zueinander angeordneten Führungsschienen dienen der Zwangsführung einer Auszugsschiene, an der die Rollobahn mit der anderen Kante befestigt ist.

Die Auszugsschiene ist gerade und in der Länge verstellbar. Sie lässt sich aus einer Ruhestellung, in der sich der Schlitz in der Hutablage weitgehend verschließt, in eine Funktionsstellung bringen, in der die Heckscheibe weitgehend abgeschattet ist: In der Funktionsstellung befindet sich die Auszugsschiene am oberen Ende der beiden Führungsschienen.

Die Betätigung des bekannten Rollos geschieht mit Hilfe von linienförmigen Schubgliedern, die in den Führungsschienen ausknicksicher geführt sind und die über einen Elektromotor angetrieben werden. Die Wickelwelle ist mit einem Federmotor vorgespannt um eine ständige Zugspannung in der Rollobahn aufrecht zu erhalten.

Das Dokument DE 10339583 A offenbart ein Fensterrollo für Fenster an Kraftfahrzeugen, insbesondere Heckfesterrollo, wobei das Fenster eine Oberkante aufweist,
mit einer drehbar gelagerten Wickelwelle,
mit einer Rollobahn, die mit einer Kante an der Wickelwelle befestigt ist, die eine von der Wickelwelle abliegende Kante aufweist und die durch einen Schlitz hindurch ausziehbar ist,
mit einer Auszugsschiene, die an der von der Wickelwelle abliegenden Kante der Rollobahn befestigt ist und aus einer Ruhestellung mit eingefahrener Rollobahn längs eines Auszugsweges in eine Funktionsstellung zu bringen ist, in der die Rollobahn vor dem Fenster des Kraftfahrzeugs aufgespannt ist
mit einer Antriebseinrichtung, die zumindest mit der Wickelwelle gekuppelt ist, um die Wickelwelle zumindest im Sinne des Aufwickelns der Rollobahn auf die Wickelwelle vorzuspannen,
mit Führungsmitteln, die die Auszugsschiene längs des Auszugswegs führen.

Zufolge der Bombierung des Daches und entsprechend der gekrümmten Oberkante des Heckfensters verbleibt bei ausgefahrener Rollobahn ein Lichtspalt zwischen der Auszugsschiene und der Oberkante des Heckfensters. Der Spalt ist bei der bekannten Anordnung in Folge des geraden Verlaufes in der Auszugsschiene unvermeidbar.

Andererseits ist ein gerader Verlauf an der Auszugsschiene wünschenswert, weil dieser in Verbindung mit einer exakt geraden Wickelwelle die günstigsten Einbau- und Wickelverhältnisse schafft.

Ausgehend hiervon ist Aufgabe der Erfindung ein neues Fensterrollo, insbesondere ein Heckfensterrollo zu schaffen, bei dem kein Lichtsspalt zwischen einer geraden Auszugsschiene und einer gekrümmten Fensterkante verbleibt.

Diese Aufgabe wird erfindungsgemäß mit dem Rollo mit den Merkmalen des Anspruches 1 gelöst.

Bei dem neuen Rollo ist wie beim Stand der Technik eine Wickelwelle vorgesehen, an der mit einer Kante eine Rollobahn befestigt ist. Die Rollobahn wird durch einen Schlitz hindurch ausgezogen, der beispielsweise in einer Hutablage oder einem Rollogehäuse enthalten ist. Das von der Wickelwelle abliegende Ende der Rollobahn ist an einer Auszugsschiene befestigt. Die Auszugsschiene wird mit Hilfe von Führungsmitteln auf ihrem gesamten Weg zwischen der Ruhestellung bei eingefahrenem Rollo und der Funktionsstellung bei ausgefahrenem Rollo geführt und getragen. Es wird zumindest die Wickelwelle im Sinnes eines Aufrechterhaltens einer Vorspannung in der Rollobahn vorgespannt.

Um den in der Funktionsstellung verbleibenden Spalt, durch den Licht unvermindert hindurchdringt, verdecken, ist die Auszugsschiene mit einer Konturplatte versehen, von der der entsprechende Rand konvex bombiert verläuft. Er verschließt den sonst noch vorhandenen segmentförmigen Spalt zwischen der Auszugsschiene und der Oberkante des Fensters. Hierzu wird die Auszugsschiene um eine Achse geschwenkt, die parallel zu ihrer Längserstreckung liegt. Dadurch wird sichergestellt, dass die Konturplatte mit dem konvex hervorstehenden Rand in der Ruhestellung des Auszugsprofils flach neben dem Schlitz aufliegt und nicht nach oben ragt. Andererseits befindet sich die Auszugsschiene in der Funkionsstellung in einer solchen Schwenkstellung, dass das Verdunkeln des Restlichtspaltes mit einer geringstmöglichen Auskragung der Konturplatte erreicht werden kann.

Die Auszugsschiene kann in der Länge verstellbar sein. Hierdurch ist sie in der Lage, auch an den Fenstern verwendet zu werden, bei denen sich die Breite des Fensters in Richtung der Bewegung in die Funktionsstellung verändert.

Die Auszugsschiene kann endseitig mit Führungsgliedern versehen sein, deren Abstand voneinander veränderbar ist.

Die Führungsglieder können so gestaltet sein, dass sie die Drehwinkelstellung der Auszugsschiene um ihre Längsrichtung zwangsläufig festlegen. Hierzu können die Führungsglieder Führungselemente aufweisen, die eine längliche Gestalt haben oder die Führungselemente können kugelförmig sein, wobei noch eine zweite Art von Führungselementen vorhanden ist, die von den kugelförmigen Führungselementen beabstandet sind und beispielsweise nur in den Nutenschlitz eintauchen.

Eine gute Führung der Auszugsschiene wird erhalten, wenn sie zwischen zwei Auszugsschienen geführt ist.

Jede Führungsschiene kann eine Führungsnut enthalten, die sich im Querschnitt gesehen aus einer Nutenkammer und einem Nutenschlitz zusammensetzt. Wenn der Nutenschlitz eine geringere Weite aufweist als die Nutenkammer, entsteht eine hinterschnittene Führungsnut, die gleichzeitig zur ausknicksicheren Führung der Schubglieder verwendet werden kann.

Zur Antriebseinrichtung gehört zweckmäßigerweise ein Elektromotor, um das Rollo von der Ferne her betätigen zu können. Eine Handbetätigung ist jedoch ebenfalls möglich, wobei es dann genügt, in der Wickelwelle einen Federmotor unterzubringen.

Um die Betätigungskraft von dem Elektromotor zu der Rollobahn zu übertragen, können linienförmige Betätigungsglieder vorhanden sein, die durch die Führungsschienen laufen.

Die Betätigung erfolgt zweckmäßigerweise über Betätigungsglieder, die als Schubglieder ausgeführt sind.

Zum Bewegen der Betätigungsglieder gehören Linearantriebsmittel, die in der Lage sind, die Drehbewegung des Elektromotors in eine Linearbewegung umzusetzen.

Die Konturplatte kann entweder mit der Auszugsschiene einstückig sein oder sie kann von der Auszugsschiene getrennt und an dieser befestigt sein.

Eine weitere Möglichkeit besteht darin, die Konturplatte elastisch auszuführen, damit sie sich an die Kontur im Dachbereich anpassen kann.

Damit die Hutablage nach dem Einfahren des Rollos möglichst glatt und eben ist, enthält sie eine Vertiefung oder Mulde, die an die Gestalt der Konturplatte angepasst ist, damit die Konturplatte darin weitgehend verschwindet und mit der Oberseite der Hutablage bündig sein kann.

Im Übrigen sind Weiterbildungen der Erfindung Gegenstand von Unteransprüchen.

In der nachfolgenden Figurenbeschreibung ist ein Ausführungsbeispiel erläutert, das in der Lage ist, vielfältig abgewandelt zu werden. Sich ohne weiteres erschließende Abwandlungen und Unterkombinationen sind nicht im Einzelnen erwähnt.

In der Zeichnung ist ein Ausführungsbeispiel des Gegenstandes der Erfindung dargestellt. Es zeigen:
- Fig. 1: ein Kraftfahrzeug in einer perspektivischen Ansicht, mit Blick in Richtung auf die Heckscheibe, bei eingefahrenem Fensterrollo,
- Fig. 2: das Fahrzeug nach Figur 1, in einer ähnlichen Darstellung mit ausgefahrenem Heckscheibenrollo,
- Fig. 3: eine schematische Darstellung des erfindungsgemäßen Heckscheibenrollos unter Veranschaulichung der Antriebseinrichtung,
- Fig. 4: das Zusammenwirken zwischen den Führungsgliedern und der zugehörigen Führungsschiene, in einer vergrößerten Darstellung und
- Fig. 5: einen Längsschnitt durch das Kraftfahrzeug nach Figur 2 zur Veranschaulichung der Schwenkbewegung der Auszugsschiene.

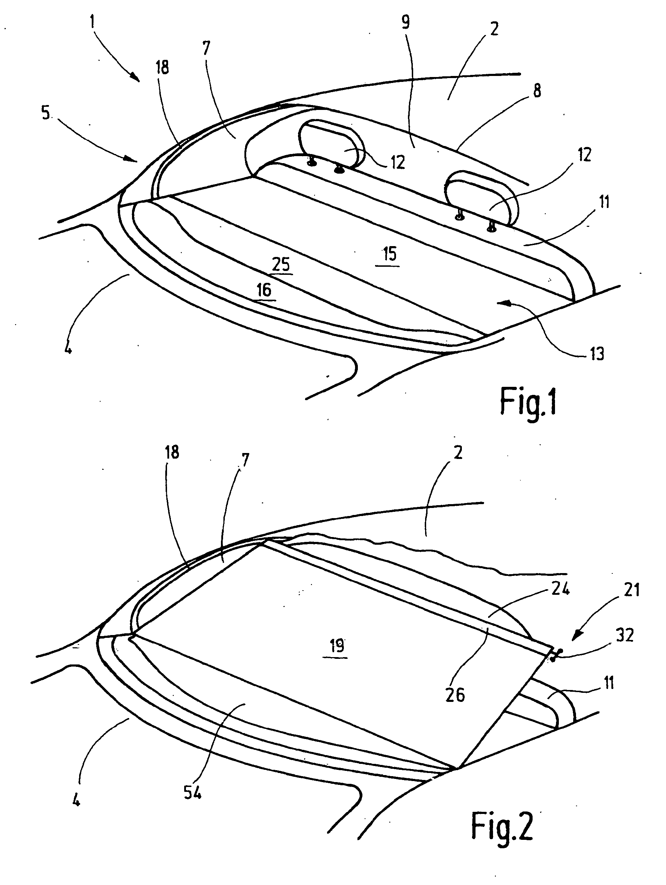

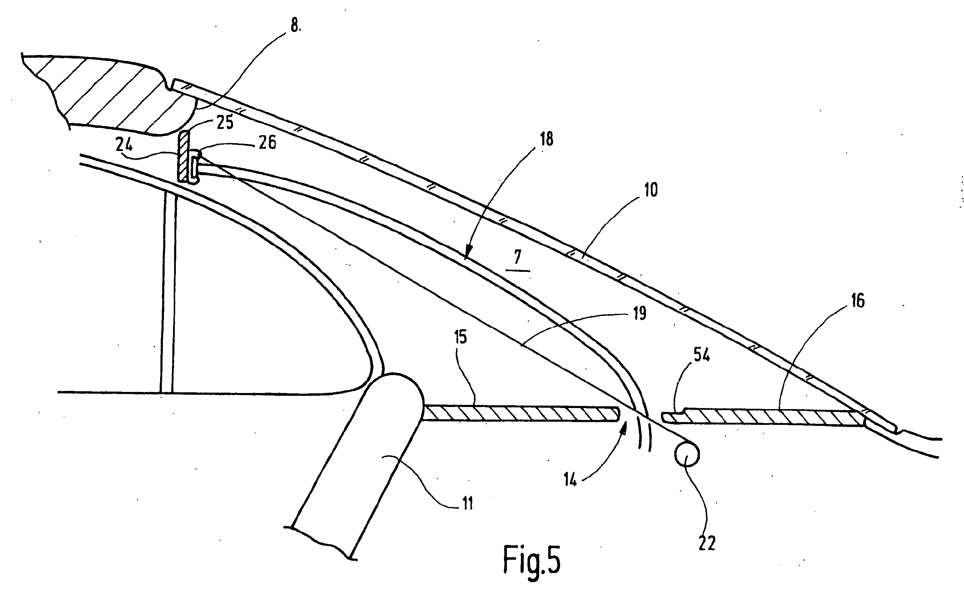

Figur 1 zeigt in einer stark schematisierten Ausschnittsdarstellung eine Heckpartie 1 einer Stufenecklimousine. Zu erkennen ist ein Fahrzeugdach 2 sowie ein Abschnitt eines Kofferraumdeckels 4. Zwischen dem Kofferraumdeckel 4 und dem Dach 2 ist eine linke C-Säule 5 mit einer daran befindlichen Innenverkleidung 7 zu erkennen. Zwischen der linken C-Säule 5, einer Hinterkante 8 des Daches 2 und der Oberseite des Kofferraums ist ein Heckscheibenausschnitt 9 sichtbar, in dem sich eine Heckscheibe 10 (Figur 5) befindet, die in der Darstellung nach Figur 1 nicht erkennbar ist. Zwischen der Unterkante des Heckscheibenausschnittes 9 und der Rückseite einer hinteren Sitzbank 11 mit Kopfstützen 12 erstreckt sich etwa horizontal eine Hutablage 13. Quer durch die Hutablage 13 verläuft ein Schlitz 14 (Figur 5), der die Hutablage 13 in einen vorderen Abschnitt 15 und einen hinteren Abschnitt 16 unterteilt. Seitlich neben dem Schlitz 14 sind in den zueinander spiegelsymmetrischen Innenverkleidungsteilen 7 der beiden spiegelsymmetrischen C-Säulen 5 jeweils zwei Führungsschienen 18 integriert. Die Führungsschienen 18 laufen zueinander spiegelbildlich und reichen von unterhalb des Schlitzes 14 bis in die Nähe der Dachhinterkante 8. Sie verlaufen demensprechend auch seitlich neben dem Heckfensterausschnitt 9.

Der Schlitz 4 dient dazu, wie Figur 2 zeigt, eine Rollobahn 19 eines Heckscheibenrollos 21 auszufahren. Figur 1 zeigt die eingefahrene Stellung, in der der Schlitz 14 weitgehend verdeckt ist, während Figur 2 die ausgezogene Stellung veranschaulicht, bei der sich die Rollobahn, die einen etwa trapezförmigen Zuschnitt hat, als weitgehend ebene Fläche unterhalb der Heckscheibe 10 ausbreitet. Sie reicht im ausgefahrenem Zustand bis in die Nähe der Hinterkante 8.

Die Führungsschienen 18 folgen etwa der Seitenkontur der Heckscheibe 10, wobei sie, wie die Figuren erkennen lassen, zunächst mit einem vertikal verlaufenen Abschnitt beginnen, der rechtwinklig zu der Ebene der Hutablage 13 verläuft. Gegen das oben liegende Ende hin erstrecken sich die beiden Führungsschienen 18 mit zunehmend horizontaler Komponente.

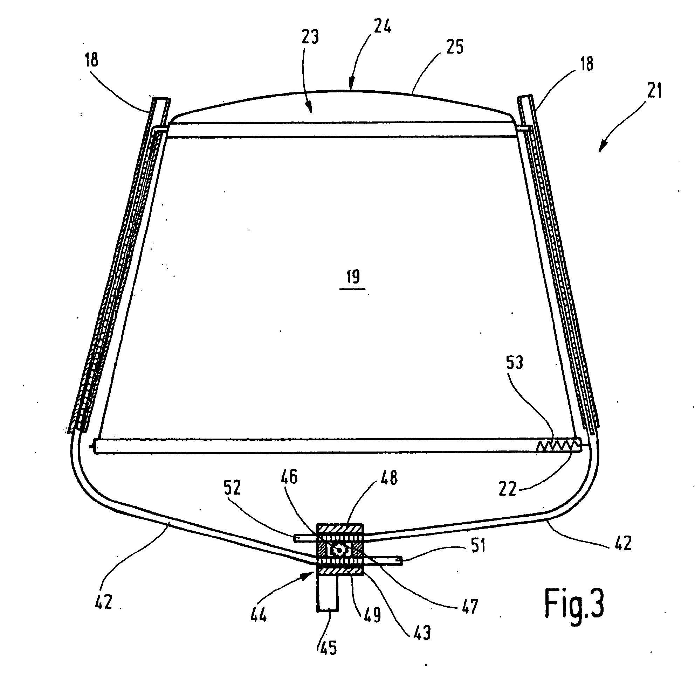

Figur 3 veranschaulicht den prinzipiellen Aufbau des Heckscheibenrollos 21, soweit dies für das Verständnis der Erfindung von Bedeutung ist.

Wie zu erkennen ist, gehört zu dem Heckscheibenrollo 21 eine unterhalb der Hutablage 13 drehbar gelagerte Wickelwelle 22, an der mit einer Kante die Rollobahn 19 befestigt ist. Die andere Kante der Rollobahn 19 ist mit einer Auszugsschiene 23 verbunden, an der eine Konturplatte 24 sitzt. Die Konturplatte 24 weist, wie gezeigt, einen von der Auszugsschiene 23 konvex weg zeigenden bombierten Rand 25 auf. Mit der Konturplatte soll, wie Figur 2 erkennen lässt, ein sonst theoretisch verbleibender Lichtspalt zwischen der Hinterkante 8 bzw. der Oberkante des Heckfensters 10 und der gerade verlaufenden Auszugsschiene 23 verdeckt werden. Wie dies im Einzelnen geschieht, ist weiter untern detailliert erläutert.

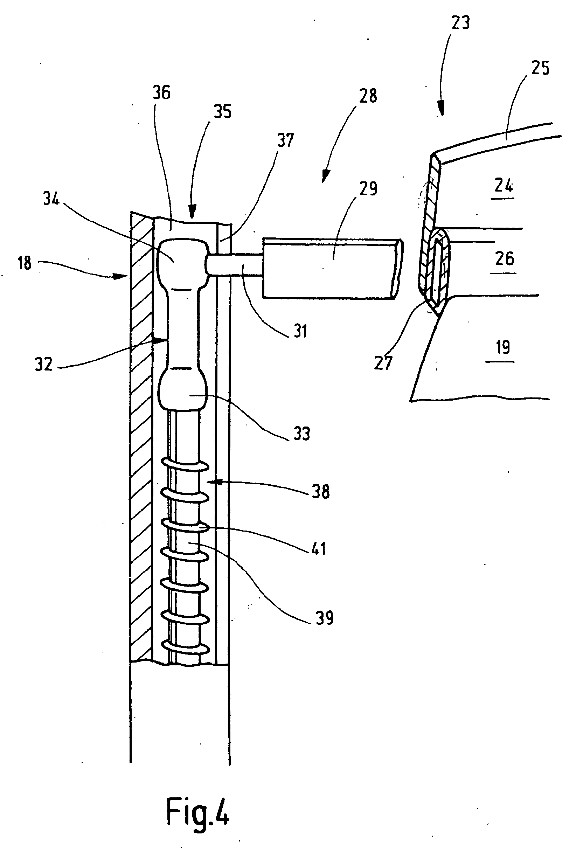

Die Auszugsschiene 23 besteht, wie Figur 4 für die linke Seite des Rollos 21 vergrößert erkennen lässt, aus einem Mittelstück 26, an dem die betreffende Kante der Rollobahn 19 verankert ist. Das Mittelsrück 26 ist rohrförmig und enthält einen im Querschnitt gesehen rechteckigen Hohlraum 27, der mit konstantem Querschnitt durch das Mittelstück 26 hindurchführt. An der vom Betrachter weg zeigenden Flachseite des Mittelstücks 26 ist die Konturplatte 24 befestigt.

In dem Hohlraum 27 ist ein Führungsglied 28 längs verschieblich geführt. Das Führungsglied 28 setzt sich aus einem Führungsstück 29 und einem daran angeformten Halsteil 31 zusammen. Das Führungsstück 29 ist im Querschnitt derart bemessen, dass es spielarm in dem Hohlraum 27 gleiten, sich jedoch nicht um die Längsachse drehen kann. Es ist somit nur eine Teleskopbewegung, keine Drehbewegung möglich. Mit anderen Worten, wenn das Führungsstück 29 um die Längsachse gedreht wird, dreht sich zwangsläufig auch des Mittelstücks 26 und damit die gesamte Auszugsschiene 23 um die Längsachse mit.

Das Halsteil 31 ist ein gerader zylindrischer Zapfen, der an seinem anderen Ende mit einem Gleiter 32 fest verbunden ist. Der Gleiter hat wie gezeigt eine längliche Gestalt, d. h. seine Längserstreckung ist größer als seine Quererstreckung, wobei er in der Mitte tailliert ist. Der Gleiter 32 hat damit insgesamt gesehen eine hantelförmige oder hundeknochenförmige runde Gestalt mit zwei verdickten Enden oder Köpfen 33, 34. Im Übrigen ist der Gleiter 32 rotationssymmetrisch.

Der in Figur 4 obere Kopf 34 ist drehfest mit dem Halsteil 31 verbunden.

Zur Aufnahme des Gleiters 32 enthält jede der Führungsschienen 18 eine Führungsnut 35, die in Figur 4 geschnitten gezeigt ist. Die Führungsnut 35 setzt sich aus einer im Querschnitt kreisförmigen Nutenkammer 36 und einem Nutenschlitz 37 zusammen. Der Nutenschlitz 37 hat eine geringere Weite als die Nutenkammer 36, so dass sich insgesamt eine hinterschnittene Führungsnut 35 ergibt. Die Weite des Nutenschlitzes 37 entspricht dem Durchmesser des Halsteils 31.

Das Ausfahren der Rollobahn 19 geschieht mit Hilfe eines linienförmigen Schubglieds 38, das in der Nutenkammer 36 ausknicksicher geführt ist. Es kann, muss aber nicht, an seinem freien Ende, zug- und druckfest mit dem Gleiter 32 verbunden sein. Eine druckfeste Verbindung genügt.

Das Schubglied 39 setzt sich aus einer zylindrischen Seele 39 und einer darauf befindlichen Wendel 41 zusammen. Die Wendel bildet eine Art umlaufenden Zahn, so dass das Schubglied 38 insgesamt die Gestalt einer umlaufenen schräg verzahnten flexiblen Zahnspange hat.

Das Schubglied 38 ist flexibel biegsam.

Die Erläuterung zu der Führungsschiene 18 sowie zu dem Führungsglied 28 gilt sinngemäß auch für die nicht gezeigte rechte Seite des Rollos 21 bzw. das andere Ende der Auszugsschiene 23, so dass sich insoweit eine weitere Erläuterung erübrigt.

Am unteren Ende jeder Führungsschiene 18 schließt sich ein Führungsrohr 42 an, das an einem Getriebegehäuse 43 eines Getriebemotors 44 endet. Der Getriebemotor 44 weist einen permanent erregten Gleichstrommotor 45 an, der über ein zwischengeschaltetes Getriebe eine Ausgangswelle 46 in Gang setzt, auf der ein Ausgangszahnrad 47 drehfest sitzt. Tangential neben dem Ausgangszahnrad 47 führen durch das Getriebegehäuse zwei Bohrungen 48 und 49 hindurch, die mit den Führungsrohren 32, wie gezeigt, fluchten. Auf der von dem Führungsrohr 42 jeweils abliegenden Seite der betreffenden Bohrung 48, 49 schließt sich ein Speicherrohr 51 oder 52 an.

Die Verzahnung des Ausgangszahnrades 47 ist auf die "Verzahnung" der beiden Schubglieder 38 abgestimmt, um eine formschlüssige Verbindung zwischen dem Schubglied 38 und dem Ausgangszahnrad 47 zu erhalten. Der Getriebemotor 44 wirkt mit dem betreffenden Abschnitt der Schubglieder 38 als Linearantrieb; das letzte Ende das ständig im Führungsrohr 42 verbleibt braucht nicht verzahnt zu sein.

Schließlich sitzt in der Wickelwelle 22 noch ein Federmotor 53, der dazu dient, die Wickelwelle 22 im Sinne eines Aufwickelns der Rollobahn 19 auf die Wickelwelle 22 vorzuspannen.

Die Funktionsweise des Heckscheibenrollos 21 sieht wie folgt aus:

Im eingefahrenen Zustand ist die Rollobahn 19 so weit wie möglich auf der Wickelwelle 22 zufolge der Wirkung des Federmotors 53 aufgewickelt. In dieser Position liegt die Auszugsschiene 23 in dem Schlitz 14, während die Konturplatte 24 neben dem Schlitz 14, wie Figur 1 zeigt, auf dem hinteren Teil 16 der Hutablage 13 aufliegt. Diese Stellung wird ermöglicht, weil die beiden Schubglieder 38 mit Hilfe des Getriebemotors 44 aus den beiden Führungsschienen 18 weit genug zurück in die zugehörigen Speicherrohe 51 und 52 geschoben worden sind.

Damit die gewünschte Relativstellung zwischen der Auszugsschiene 23 bzw. der Konturplatte 24 und der Hutablage 13 erhalten wird, ist der Verlauf der Führungsschiene 18 im jenem Bereich, in dem die Führungsschiene 18 an der Hutablage 13 nach unten weg taucht, entsprechend an die Drehwinkelstellung der Längsachse der Gleiter 32 und damit des Mittelstücks 26 gegenüber der Konturplatte 24 angepasst.

Die längliche hantelförmige Gestalt der beiden Gleiter 32 definiert die Drehwinkelstellung der Auszugsschiene 23 gegenüber der Längsachse der beiden Führungsschienen 18.

Um die Rollobahn 19 aus dieser Stellung, in der die Heckscheibe 10 nicht abgeschattet ist, in die Funktionsstellung nach Figur 2 zu bringen, wird vom Benutzer der Getriebemotor 44 entsprechend in Gang gesetzt. Das Ausgangszahnrad 47, das formschlüssig mit den beiden Schubgliedern 38 kämmt, schiebt diese in Richtung auf die jeweilige Führungsschiene 18 vor. Da beide Schubglieder 38 mit dem selben Ausgangszahnrad 47 gekoppelt sind, jedoch an diametral gegenüberliegenden Seiten, bewegen sich die Schubglieder 38 gesehen aus der Position des Getriebemotors 44 in entgegengesetzter Richtung, jedoch mit derselben Geschwindigkeit. Bei dieser Bewegung nehmen sie mit ihrem in der jeweiligen Führungsschiene 18 laufenden Ende den zugehörigen Gleiter 32 mit und schieben ihn vor sich her. Die Auszugsschiene 23 wird so an beiden Seiten um gleiche Beträge pro Zeiteinheit von dem Schlitz 14 nach oben zu der Hinterkante 8, die mit der Fensteroberkante zusammenfällt, bewegt.

Da die Gleiter 32 eine längliche Gestalt haben, fällt ihre Längsachse immer mit der Längsachse der Führungsschiene 18 an der betreffenden Stelle zusammen. Die Führungsschienen 18 gehen, wie Eingangs erläutert, ausgehend von einem etwa vertikal verlaufenden Abschnitt, in der Nähe des Schlitzes 14 allmählich in einen Bereich über, in dem sie eine starke Horizontalkomponente in ihrem Verlauf haben, weshalb sich die Auszugsschiene 23 während der Bewegung längs den Führungsschienen 18 um eine Achse dreht, die parallel zu ihrer Längsachse liegt. Dies hat zur Folge, dass sich die ursprünglich horizontal ausgerichtete Konturplatte 24 zunehmend aufrichtet, in dem Maße, in dem sich die Auszugsschiene 23 zusammen mit der Konturplatte 24 der Fensteroberkante 18 nähert. Am Ende der Ausfahrbewegung wird die Konturplatte 24, wie Figur 5 zeigt, mehr oder weniger senkrecht stehen.

In dieser End- oder Funktionsstellung der Auszugsschiene 23 ist die Rollobahn 19 vor dem weitaus größten Teil der Heckscheibe 10 im Bereich zwischen dem Schlitz 14 und der Fensteroberkante 8 aufgespannt.

Die oberen Enden der beiden Führungsschienen liegen etwa in der Nähe der oberen Ecken des Heckfensters 10. Zufolge dieser Position würde ohne die Konturplatte 24 zwischen der Auszugsschiene 23 und der Fensteroberkante 8 wegen der Bombierung des Dachhimmels ein segmentförmiger Spalt verbleiben, der nicht abgedeckt ist. Dieser beim Stand der Technik verbleibende Spalt wird bei der Erfindung durch die Konturplatte 24 verschlossen. Der freie Rand 25 der Konturplatte 24 ist entsprechend gestaltet, um den zwischen der geraden Auszugsschiene 23 und der Fensteroberkante 8 verbleibende Spalt zu verschließen.

Bei der Bewegung aus der Ruhestellung in die Funktionsstellung hat sich, wie Figur 5 zeigt, die Auszugsschiene 23 zusammen mit der Konturplatte 24 etwa um 90° gedreht. Die ehemals liegende Konturplatte 24 steht jetzt weitgehend aufgerichtet. In diese Position wurde die Konturplatte 24 formschlüssig gebracht, da durch die Wirkungen der Gleiter 32 in den Führungsschienen 18 die Auszugsschiene 23 entsprechend gedreht wurde. Ihre azimutale Ausrichtung bezüglich der Längsachse der Führungsschiene 18 an der jeweiligen Position wird durch die länglichen Gleiter 32 zwangsläufig fixiert.

Die Gleiter 32 verhindern, dass die Auszugsschiene 23 durch die Tuchspannung in der Rollobahn 19 eine gekippte Stellung einnehmen könnte.

Die Schwenkbewegung, die die Gleiter 32 bei ihrem Lauf durch die Führungsschiene 18 erfahren, wird durch die flachkantige Ausgestaltung des Führungsstücksstücks formschlüssig auch in das Mittelteil 26 der Auszugsschiene 23 und damit auch auf die daran befestigte Konturplatte 24 übertragen.

Die Schwenkbewegung der Auszugsschiene 23 um ihre Längsachsachse bei der Ausfahrebewegung wird bei der Einfahrbewegung wieder zurückgenommen. Zum Einfahren wird der Getriebemotor 44 in der entgegengesetzten Drehrichtung in Gang gesetzt, um die Schubglieder 38 aus den Führungsschienen 18 zurückzuziehen. Hierdurch werden die Gleiter 32 zurückgezogen, wenn sie mit den freien Enden der Schubglieder 38 verbunden sind oder sie bewegen sich allein aufgrund der Vorspannung des Federmotors 53 durch die Führungsschienen 18, wenn die Schubglieder 38 zurückweichen.

Welche Winkelstellung die Längsachse der Gleiter 32 gegenüber der Ebene, die sie durch die Konturplatte 24 definiert ist, haben hängt davon ab, unter welchem Winkel die Führungsschiene in der Umgebung der Hutablage 13 verläuft und um welchen Betrag die Konturplatte 24 in der Funktionsstellung gemäß Figur 5 ausgerichtet werden soll. Dies wiederum ist außerdem noch eine Funktion des Winkels, den dort die Achse der Führungsschiene 18 gegenüber der Vertikalen hat.

Exakte Winkel lassen sich hier nicht angehen, sie sind vielmehr im Rahmen der oben gegebenen Lehre jeweils empirisch zu ermitteln.

Die Konturplatte 24 kann eine starre Platte sein, die stoffschlüssig mit dem Mittelstück 26 verbunden ist. Sie kann mit dem Mittelstück 26 auch einteilig hergestellt sein. Schließlich ist es denkbar, die Konturplatte 24 aus einem biegeelastischen Material herzustellen, so dass sie sich in der Funktionsstellung an den Rand der Fensterkante 8 anschmiegen kann.

Um eine möglichst flache Konformation zu erhalten, wenn das Rollo 21 eingefahren ist, kann wie gezeigt in dem hinteren Abschnitt 16 der Hutablage 13 eine Mulde 54 ausgebildet sein. Die Mulde 54 nimmt die Konturplatte 24 auf, wenn die darunter befindliche Auszugsschiene 23 in dem Schlitz 14 eingetaucht ist. Die Fläche, die dann die Oberseite der Konturplatte 24 bildet, liegt bündig in der Ebene der Oberseite der Hutablage 13.

Ein Heckfensterrollo für Kraftfahrzeuge ist an der Auszugsschiene mit einer Konturplatte versehen. Die Konturplatte dient dazu, den segmentförmigen Restspalt zwischen der geraden Auszugsschiene und der gekrümmten Oberkante des Heckfensters zu verschließen. Damit die Konturplatte in der eingefahrenen Stellung bündig mit der Hutablage liegt, vollführt sie während der Ausfahrbewegung eine Drehbewegung um die Längsachse, d.h. sie richtet sich allmählich auf. Gesteuert wird diese Bewegung durch den Verlauf der Führungsschienen, in denen die Auszugsschiene drehfest geführt ist.

## Patentansprüche

1. Fensterrollo (21) für Fenster (9,10) an Kraftfahrzeugen (1), insbesondere Heckfesterrollo, wobei das Fenster (9,10) eine Oberkante (8) aufweist,
mit einer drehbar gelagerten Wickelwelle (22),
mit einer Rollobahn (19), die mit einer Kante an der Wickelwelle (22) befestigt ist, die eine von der Wickelwelle (22) abliegende Kante aufweist und die durch einen Schlitz (14) hindurch ausziehbar ist,
mit einer Auszugsschiene (23), die an der von der Wickelwelle (22) abliegenden Kante der Rollobahn (19) befestigt ist und aus einer Ruhestellung mit eingefahrener Rollobahn (19) längs eines Auszugsweges in eine Funktionsstellung zu bringen ist, in der die Rollobahn (19) vor dem Fenster (9,10) des Kraftfahrzeugs (1) aufgespannt ist
mit einer Antriebseinrichtung (44,53), die zumindest mit der Wickelwelle (22) gekuppelt ist, um die Wickelwelle (22) zumindest im Sinne des Aufwickelns der Rollobahn (19) auf die Wickelwelle (22) vorzuspannen,
mit Führungsmitteln (18), die die Auszugsschiene (23) längs des Auszugswegs führen und die Auszugsschiene (23) um eine Achse schwenken, die parallel zu der Längsachse der Auszugsschiene (23) liegt, wobei sich die Auszugsschiene (23) in der Ruhestellung in einer Schwenkstellung und in der Funktionsstellung in einer zweiten Schwenkstellung befindet, die gegenüber der ersten Schwenkstellung gedreht ist, und
mit einer Konturplatte (24), die an der Auszugsschiene (23) vorgesehen ist und von der ein Rand (25) konvex bombiert verläuft, derart, dass in der Funktionsstellung nahezu kein Lichtspalt mehr verbleibt.

2. Fensterrollo nach Anspruch 1, **dadurch gekennzeichnet, dass** unterhalb des Fensters (9,10) eine Hutablage (13) vorgesehen ist.

3. Fensterrollo nach Anspruch 2, **dadurch gekennzeichnet, dass** der Schlitz (14) in der Hutablage (13) angeordnet ist.

4. Fensterrollo nach Anspruch 1, **dadurch gekennzeichnet, dass** die Auszugsschiene (23) in der Länge verstellbar ist.

5. Fensterrollo nach Anspruch 1, **dadurch gekennzeichnet, dass** die Auszugsschiene (23) endseitige Führungsglieder (28) aufweist, deren Abstand von einander veränderbar ist.

6. Fensterrollo nach Anspruch 1, **dadurch gekennzeichnet, dass** die Auszugsschiene (23) sich aus einem Mittelstück (26) und zwei endseitigen Führungsgliedern (28) zusammensetzt, die in dem Mittelstück (26) längsverschieblich jedoch drehfest geführt sind.

7. Fensterrollo nach Anspruch 5, **dadurch gekennzeichnet, dass** die Führungsglieder (28) derart gestaltet sind, dass sie die Drehwinkelstellung der Auszugsschiene (23) um ihre Längsachse zwangsläufig festlegen.

8. Fensterrollo nach Anspruch 5, **dadurch gekennzeichnet, dass** die Führungsglieder (28) Gleiter (32) aufweisen, die eine längliche Gestalt haben.

9. Fensterrollo nach Anspruch 8, **dadurch gekennzeichnet, dass** die Gleiter (32) mit kugelförmiger Gestalt aufweisen.

10. Fensterrollo nach Anspruch 9, **dadurch gekennzeichnet, dass** zweite von den kugelförmigen Gleitern (32) beabstandete Führungselemente vorgesehen sind.

11. Fensterrollo nach Anspruch 1, **dadurch gekennzeichnet, dass** zu den Führungsmitteln (18) zwei Führungsschienen gehören, zwischen denen die Auszugsschiene (23) geführt ist.

12. Fensterrollo nach Anspruch 11, **dadurch gekennzeichnet, dass** jede Führungsschiene (18) eine Führungsnut (35) enthält, die sich im Querschnitt gesehen aus einer Nutenkammer (36) und einem Nutenschlitz (37) zusammensetzt.

13. Fensterrollo nach Anspruch 12, **dadurch gekennzeichnet, dass** der Nutenschlitz (37) eine geringere Weite aufweist als die im Nutenkammer (36), derart, dass sich eine hinterschnittene Führungsnut (35) ergibt.

14. Fensterrollo nach Anspruch 1, **dadurch gekennzeichnet, dass** die Antriebseinrichtung (44,54) einen Elektromotor (45) umfasst.

15. Fensterrollo nach Anspruch 11, **dadurch gekennzeichnet, dass** zu der Antriebseinrichtung (44,54) linienförmige Betätigunsglieder (38) gehören, die durch die Führungsschienen (18) verlaufen und von denen jedes mit einem Ende mit der Auszugsschiene (23) in Wirkverbindung steht.

16. Fensterrollo nach Anspruch 15, **dadurch gekennzeichnet, dass** die Betätigungsglieder (38) Schubglieder sind, sind, die ausknicksicher geführt sind.

17. Fensterrollo nach Anspruch 16, **dadurch gekennzeichnet, dass** die Schubglieder (38) in der Führungskammer (36) laufen.

18. Fensterrollo nach Anspruch 15, **dadurch gekennzeichnet, dass** zu der Antriebseinrichtung (44,54) Linearantriebsmittel gehören um die Betätigungsglieder (38) zu bewegen.

19. Fensterrollo nach Anspruch 1, **dadurch gekennzeichnet, dass** die Konturplatte (25) und die Auszugsschiene (23) zwei aneinander befestigte Teile sind.

20. Fensterrollo nach Anspruch 1, **dadurch gekennzeichnet, dass** die Konturplatte (25) mit der Auszugsschiene (25) einstückig ist.

21. Fensterrollo nach Anspruch 1, **dadurch gekennzeichnet, dass** die Konturplatte (25) biegeelastisch ist.

22. Fensterrollo nach Anspruch 1, **dadurch gekennzeichnet, dass** neben dem Schlitz (14) in der Hutablage (13) eine Mulde (54) vorgesehen ist, deren Verlauf der Gestalt der Konturplatte (25) entspricht.

## Claims

1. Window roller blind (21) for windows (9, 10) in motor vehicles (1), in particular rear window roller blind, wherein the window (9, 10) has an upper edge (8),
with a rotatably mounted winding shaft (22),
with a blind sheet (19), which is fastened to the winding shaft (22) at one edge, which has an edge remote from the winding shaft (22) and which can be pulled out through a slot (14),
with a pull-out rail (23), which is fastened to the edge of the blind sheet (19) remote from the winding shaft (22) and can be moved out of a resting position with retracted blind sheet (19) along a pull-out path into a function position, in which the blind sheet (19) is opened out in front of the window (9, 10) of the motor vehicle (1),
with a drive means (44, 53), which is coupled at least to the winding shaft (22) in order to bias the winding shaft (22) at least in the direction of winding up the blind sheet (19) onto the winding shaft (22),
with guide elements (18), which guide the pull-out rail (23) along the pull-out path and pivot the pull-out rail (23) around an axis, which lies parallel to the longitudinal axis of the pull-out rail (23), wherein in the resting position the pull-out rail (23) is located in a pivoting position and in the function position is located in a second pivoting position, which is rotated in relation to the first pivoting position, and
with a contour plate (24), which is provided in the pull-out rail (23) and an edge (25) of which runs in a convex arch in such a way that there is almost no light gap remaining in the function position.

2. Window roller blind according to claim 1, **characterised in that** a parcel shelf (13) is provided under the window (9, 10).

3. Window roller blind according to claim 2, **characterised in that** the slot (14) is arranged in the parcel shelf (13).

4. Window roller blind according to claim 1, **characterised in that** the pull-out rail (23) is adjustable in length.

5. Window roller blind according to claim 1, **characterised in that** the pull-out rail (23) has guide members (28) at the ends, the spacing of which is variable.

6. Window roller blind according to claim 1, **characterised in that** the pull-out rail (23) is composed of a centre piece (26) and two guide members (28) at the ends, which are arranged in the centre piece (26) to be longitudinally displaceable but fixed against rotation.

7. Window roller blind according to claim 5, **characterised in that** the guide members (28) are configured in such a way that they necessarily fix the position of the pull-out rail (23) of the angle of rotation around its longitudinal axis.

8. Window roller blind according to claim 5, **characterised in that** the guide members (28) have sliders (32), which have an elongated shape.

9. Window roller blind according to claim 8, **characterised in that** the sliders (32) have a spherical shape.

10. Window roller blind according to claim 9, **characterised in that** second guide elements spaced from the spherical sliders (32) are provided.

11. Window roller blind according to claim 1, **characterised in that** the guide elements (18) include two guide rails, between which the pull-out rail (23) is guided.

12. Window roller blind according to claim 11, **characterised in that** each guide rail (18) contains a guide groove (35), which, when viewed in cross-section, is composed of a groove chamber (36) and a groove slot (37).

13. Window roller blind according to claim 12, **characterised in that** the groove slot (37) has a smaller width than that in the groove chamber (36) such that an undercut guide groove (35) results.

14. Window roller blind according to claim 1, **characterised in that** the drive means (44, 54) comprises an electric motor (45).

15. Window roller blind according to claim 11, **characterised in that** the drive means (44, 54) includes linear operating members (38), which run through the guide rails (18) and each of which stands in active connection at one end with the pull-out rail (23).

16. Window roller blind according to claim 15, **characterised in that** the operating members (38) are pushing members, which are guided to be secure against buckling.

17. Window roller blind according to claim 16, **characterised in that** the pushing members (38) run in the guide chamber (36).

18. Window roller blind according to claim 15, **characterised in that** the drive means (44, 54) includes linear drive elements to move the operating members (38).

19. Window roller blind according to claim 1, **characterised in that** the contour plate (25) and the pull-out rail (23) are two parts fastened to one another.

20. Window roller blind according to claim 1, **characterised in that** the contour plate (25) is in one piece with the pull-out rail (25).

21. Window roller blind according to claim 1, **characterised in that** the contour plate (25) is flexible.

22. Window roller blind according to claim 1, **characterised in that** a cavity (54) having a course corresponding to the shape of the contour plate (25) is provided beside the slot (14) in the parcel shelf (13).

## Revendications

1. Store à enrouleur (21) pour fenêtre (9, 10) sur des véhicules automobiles (1), en particulier store pour lunette arrière, la fenêtre (9, 10) présentant un bord supérieur (8),
comprenant un axe d'enroulement (22) monté tournant,
comprenant une bande de store (19) qui est fixée par un bord à l'axe d'enroulement (22), qui présente un bord éloigné de l'axe d'enroulement (22) et qui peut être déroulée en passant par une fente (14),
comprenant une barre de traction (23) qui est fixée au bord de la bande de store (19) éloigné de l'axe d'enroulement (22) et peut être amenée d'une position de repos, dans laquelle la bande de store (19) est enroulée, le long d'une course de déroulement, dans une position de fonctionnement dans laquelle la bande de store (19) est étendue devant la fenêtre (9, 10) du véhicule automobile (1),
comprenant un dispositif d'entraînement (44, 53) qui est accouplé au moins à l'axe d'enroulement (22), afin de mettre l'axe d'enroulement (22) sous précontrainte, au moins dans le sens de l'enroulement de la bande de store (19) sur l'axe (22),
comprenant des moyens de guidage (18) qui guident la barre de traction (23) le long de la course de déroulement et font pivoter la barre de traction (23) autour d'un axe qui est parallèle à l'axe longitudinal de la barre de traction (23), ladite barre (23), lorsqu'elle est en position de repos, occupant une position de pivotement et, lorsqu'elle est en position de fonctionnement, occupant une deuxième position de pivotement qui est tournée par rapport à la première position de pivotement, et
comprenant une plaque profilée (24) qui est prévue sur la barre de traction (23) et dont un bord (25) s'étend sous une forme bombée convexe, de manière à ce qu'il ne subsiste quasiment plus de fente lumineuse dans la position de fonctionnement.

2. Store à enrouleur selon la revendication 1, **caractérisé par le fait qu'**une plage arrière (13) est prévue sous la fenêtre (9, 10).

3. Store à enrouleur selon la revendication 2, **caractérisé par le fait que** la fente (14) est disposée dans la plage arrière (13).

4. Store à enrouleur selon la revendication 1, **caractérisé par le fait que** la barre de traction (23) est réglable en longueur.

5. Store à enrouleur selon la revendication 1, **caractérisé par le fait que** la barre de traction (23) présente des éléments de guidage (28) situés à ses extrémités, dont l'écartement peut être modifié.

6. Store à enrouleur selon la revendication 1, **caractérisé par le fait que** la barre de traction (23) se compose d'un élément central (26) et de deux éléments de guidage (28) situés à ses extrémités, qui sont guidés dans l'élément central (26) avec possibilité de coulissement longitudinal mais fixes en rotation.

7. Store à enrouleur selon la revendication 5, **caractérisé par le fait que** les éléments de guidage (28) sont conçus de manière à définir obligatoirement la position angulaire de la barre de traction (23) autour de son axe longitudinal.

8. Store à enrouleur selon la revendication 5, **caractérisé par le fait que** les éléments de guidage (28) présentent des éléments coulissants (32) qui ont une forme oblongue.

9. Store à enrouleur selon la revendication 8, **caractérisé par le fait que** les éléments coulissants (32) ont une forme sphérique.

10. Store à enrouleur selon la revendication 9, **caractérisé par le fait qu'**il est prévu des deuxièmes éléments de guidage qui sont espacés des éléments coulissants (32) de forme sphérique.

11. Store à enrouleur selon la revendication 1, **caractérisé par le fait que** les moyens de guidage (18) englobent deux glissières entre lesquelles est guidée la barre de traction (23).

12. Store à enrouleur selon la revendication 11, **caractérisé par le fait que** chaque glissière (18) comporte une rainure de guidage (35) qui, vue en section transversale, se compose d'une cavité de rainure (36) et d'une fente de rainure (37).

13. Store à enrouleur selon la revendication 12, **caractérisé par le fait que** la fente de rainure (37) présente une largeur inférieure à celle de la cavité de rainure (36), de manière à former une rainure de guidage (35) en contre-dépouille.

14. Store à enrouleur selon la revendication 1, **caractérisé par le fait que** le dispositif d'entraînement (44, 54) comprend un moteur électrique (45).

15. Store à enrouleur selon la revendication 11, **caractérisé par le fait que** le dispositif d'entraînement (44, 54) comprend des organes d'actionnement (38) linéaires qui passent dans les glissières (18) et qui sont chacun en liaison active par une extrémité avec la barre de traction (23).

16. Store à enrouleur selon la revendication 15, **caractérisé par le fait que** les organes d'actionnement (38) sont des organes de poussée qui sont guidés de manière à résister au flambage.

17. Store à enrouleur selon la revendication 16, **caractérisé par le fait que** les organes de poussée (38) passent dans la cavité de guidage (36).

18. Store à enrouleur selon la revendication 15, **caractérisé par le fait que** le dispositif d'entraînement (44, 54) comprend des moyens d'entraînement linéaires, destinés à déplacer les organes d'actionnement (38).

19. Store à enrouleur selon la revendication 1, **caractérisé par le fait que** la plaque profilée (24) et la barre de traction (23) sont deux éléments fixés l'un à l'autre.

20. Store à enrouleur selon la revendication 1, **caractérisé par le fait que** la plaque profilée (24) est réalisée d'une seule pièce avec la barre de traction (23).

21. Store à enrouleur selon la revendication 1, **caractérisé par le fait que** la plaque profilée (24) est élastique en flexion.

22. Store à enrouleur selon la revendication 1, **caractérisé par le fait qu'**il est prévu dans la plage arrière (13), à côté de la fente (14), un évidement (54) dont la forme correspond à celle de la plaque profilée (24).
